# NOUVEAU FASCICULE DE BREVET EUROPEEN

(11) **EP 0 210 890 B2**
(45) Date de publication et mention de la décision concernant l'opposition: **07.07.1993**
(45) Mention de la délivrance du brevet: 18.07.1990
(21) Numéro de dépôt: 86401425.3
(22) Date de dépôt: 27.06.1986
(51) Int. Cl.: G02B 27/00, H04N 9/31

(54) **Dispositif de visualisation collimatée en couleurs**
Kollimatierende Farbsichtvorrichtung
Colour-collimated visualization device

(30) Priorité: 28.06.1985 FR 8509901
(43) Date de publication de la demande: 04.02.1987
(73) Titulaire: THOMSON-CSF, 75008 Paris (FR)
(72) Inventeur: Gerbe, Jean-Pierre c/o Thomson-CSF SCPI, F-75008 Paris (FR); Girault, Hervé c/o Thomson-CSF SCPI, F-75008 Paris (FR); Maureau, Claude c/o Thomson-CSF SCPI, F-75008 Paris (FR)
(74) Mandataire: Guérin, Michel

(56) Documents cités:
- FR-A- 2 523 788
- 1982 SID INTERNATIONAL SYMPOSIUM DIGEST OF TECHNICAL PAPERS, SOCIETY FOR SID INFORMATION DISPLAY, 1ère édition, mai 1982, pages 146,147, Lewis Winner, Coral Gables, US; S.J. ELMER: "13.5/4:15 P.M.: A flight simulation color calligraphic CRT projector"
- NADC-77212-30 "Development of a color alphanumeric liquid crystal display"
- Optics Technology, February 1969, pp. 63-70

## Description

L'invention concerne un dispositif de visualisation collimatée en couleurs applicable notamment dans un équipement de tableau de bord pour avion de chasse, permettant de présenter au pilote une image collimatée en couleurs, et possédant une définition suffisante pour accepter des images de capteurs haute résolution.

Dans les avions de chasse modernes, les informations nécessaires au pilotage et à la mission sont de plus en plus présentées sur des écrans cathodiques qui remplacent les instruments électromécaniques. La place disponible étant très réduite, il est intéressant de pouvoir utiliser un écran à plusieurs fonctions différentes suivant les phases de vol. Par exemple: image synthétique pour la navigation (en couleur) puis image télévison noir et blanc d'un capteur du type caméra ou FLIR lors d'une phase d'attaque.

Dans l'état de l'art actuel, un écran couleur à tube du type shadowmask dont les dimensions sont compatibles avec une installation dans un avion de combat ne permet pas de présenter une image de haute résolution (1000 points x 1000 points par exemple. De plus, une fois installé dans la planche de bord de l'avion, il est à une distance telle du pilote qu'il n'est visible que sous un angle faible (environ 10 degrés, ce qui limite la quantité d'informations que l'on peut y afficher.

L'invention permet de résoudre ces deux problèmes en fournissant une image couleur qui peut être de haute résolution et qui est vue par le pilote sous un angle qui peut atteindre 20 degrés tout en conservant un encombrement compatible avec une installation dans une planche de bord d'un avion de chasse. Le document FR-A 2 523 788 correspond au préambule de la revendication 1.

L'invention concerne donc un dispositif comme revendiqué dans la revendication 1.

Les différents objets et caractéristiques de l'invention seront détaillés dans la description qui va suivre faite en se reportant aux figures annexées qui représentent:
- la figure 1, un exemple de réalisation du dispositif de visualisation de l'invention;
- la figure 2, un exemple de réalisation du dispositif de visualisation de l'invention permettant une application plus aisée dans un avion d'armes;
- la figure 3, une variante de réalisation du dispositif de la figure 2.

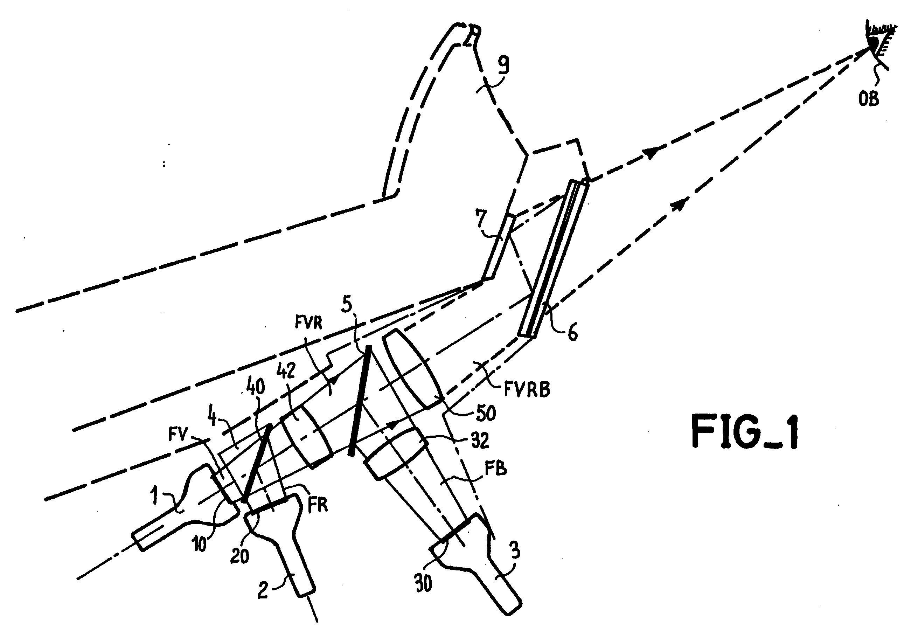

En se reportant à la figure 1 on va d'abord décrire un exemple de réalisation du dispositif de l'invention.

On dispose de trois tubes cathodiques monochromes de dimensions identiques mais dont les phosphores émissifs sont différents:
- un tube 1 contient un phosphore émettant en vert,
- un tube 2 contient un phosphore émettant en rouge,
- un tube 3 contient un phosphore émettant en bleu.

Le tube 1 affiche une image 10 émettant un faisceau lumineux FV de couleur verte.

Le tube 2 affiche une image 20 émettant un faisceau lumineux FR de couleur rouge. Les deux faisceaux FV et FR sont concourants.

Un dispositif optique mélangeur constitué d'un prisme 4 possédant une face 40 est placé sur le trajet des deux faisceaux FV et FR de telle façon que la face 40 soit dans un plan contenant la bissectrice de l'angle faisant les directions des deux faisceaux FVet FR. La face 40 a subi un traitement dichroïque de telle façon qu'elle transmette le faisceau FV et réfléchisse le faisceau FR.

La position de la face 40 est telle que les faisceaux FV et FR se superposent et donnent lieu à un faisceau résultant unique FVR. Ce faisceau est collimaté par un objectif de collimation 42.

Il est à noter que le dispositif mélangeur (4, 40) peut être constitué d'une simple lame ayant subi un traitement dichroïque et disposée selon la face 40 du prisme 4.

Le tube 3 affiche une image 30 émettant un faisceau lumineux FB de couleur bleue qui est collimaté par l'objectif 32.

Un dispositif optique mélangeur 5 constitué de façon similaire au dispositif mélangeur (4,40) et comportant au minimum une lame 5 ayant subi un traitement dichroïque de façon à transmettre le faisceau FVR fourni par le dispositif mélangeur (4, 40) et à réfléchir le faisceau FB fourni par la source d'image 3. La lame 5 est placée à l'intersection des deux faisceaux FVR et FB selon un plan contenant la bissectrice de l'angle faisant les directions des deux faisceaux. A l'aide de la lame 5, les deux faisceaux FVR et FB se superposent et donnent lieu à un faisceau résultant unique FVRB.

Le faisceau résultant FVRB est collimaté par un objectif 50 puis transmis à un observateur OB par l'intermédiaire d'une glace. Pour augmenter le champ d'observation cette glace comporte, de manière connue dans la technique, un système à double lame 6,7.

Les dispositifs mélangeurs de faisceaux par lame ayant subi un traitement dichroïque (4,5), permettent d'obtenir un rendement de réflexion de chaque faisceau atteignant 80 %.

Dans le cadre de l'invention, il importe de disposer la première source d'image 1 émettant un faisceau FV de couleur verte de telle façon que ce faisceau ne subisse pas de réflexion.

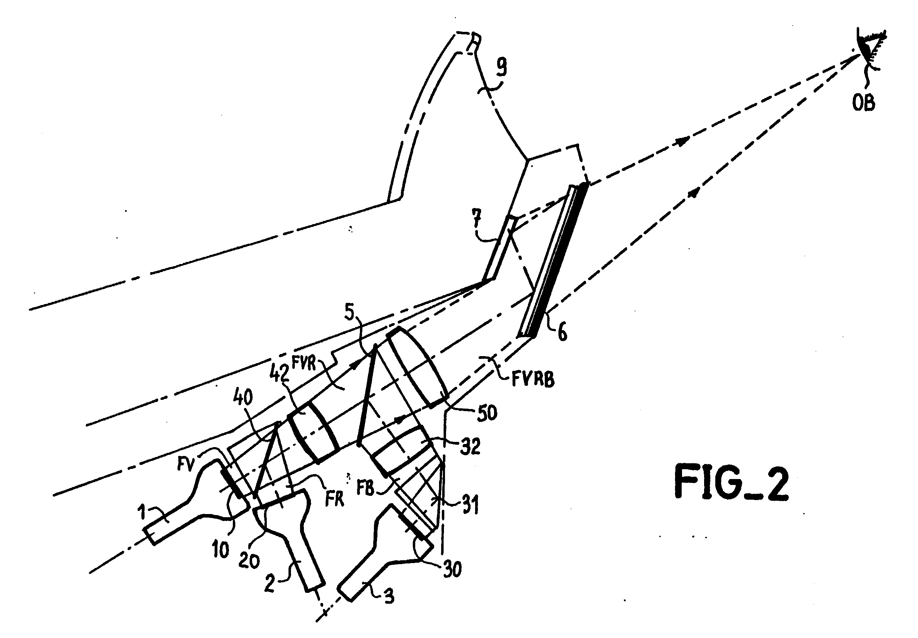

En se reportant à la figure 2 on va décrire une disposition du système de l'invention permettant de gagner en encombrement en vue d'un montage plus aisé dans un avion de chasse.

Par rapport à la figure 1, le dispositif de la figure 2 comporte un dispositif de réflexion 31, un prisme par exemple, placé sur le trajet du faisceau FB émis par la source d'images 3. Ce dispositif de réflexion 31 réfléchit le faisceau vers la lame 5 à travers l'objectif 32. Il permet ainsi de placer la source d'images 3 à proximité des deux autres sources d'images 1 et 2.

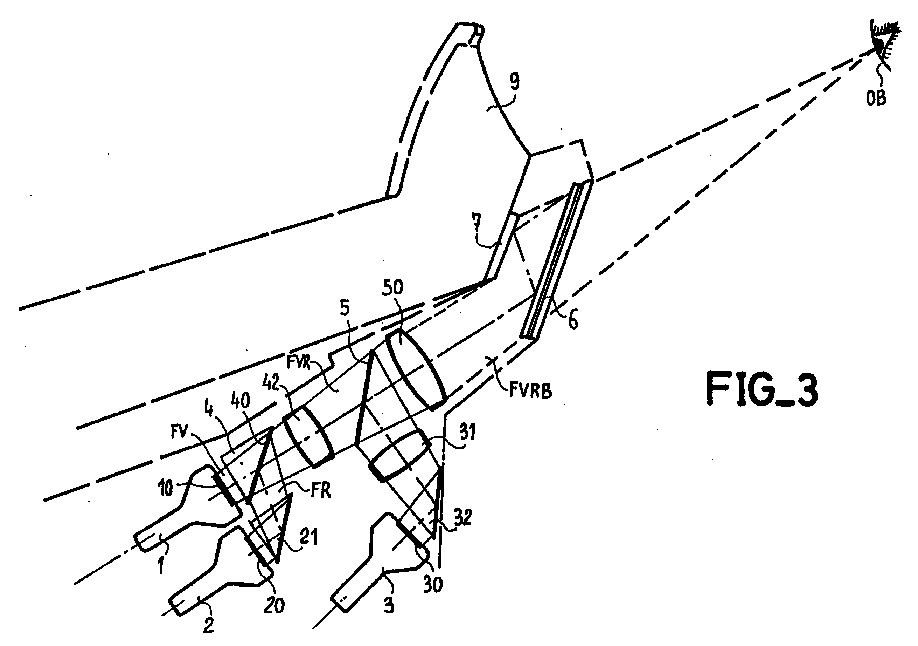

Une variante de réalisation est représentée en figure 3 et permet de rendre plus compact le dispositif de l'invention.

Par rapport à la figure 2, on prévoit également un dispositif de réflexion 21 tel qu'un prisme, sur le trajet du faisceau lumineux FR émis par la source 2. Ce dispositif de réflexion 21 réfléchit le faisceau FR vers le dispositif mélangeur 40. Selon une telle disposition les trois sources d'images 1, 2 et 3 émettent des faisceaux FV, FR et FB parallèles.

Dans le cas d'une réalisation de l'invention avec des tubes à rayons cathodiques, les trois tubes sont donc disposés parallèlement.

Cependant la représentation des sources d'images 1, et 3 sur les trois figures annexées sous forme de tubes à rayons cathodiques n'a été fournie qu'à titre d'exemple. En effet, toute autre source lumineuse telle que des cellules à cristal liquide peut convenir.

Il est à noter que pour obtenir une bonne superposition des faisceaux lumineux, dans le cas où les trois sources affichent des images de mêmes dimensions, les positions de ces sources seront telles, dans différents modes de réalisation de l'invention, que les trajets des différents faisceaux FV, FR et FB jusqu'à l'observateur OB seront de même longueur compte- tenu des caractéristiques des objectifs placés sur les trajets des faisceaux lumineux.

Sur les différentes figures, le système à double lame 6, 7 a été monté sur le tableau de bord dans un cockpit 9 d'un avion de chasse.

## Revendications

1. Dispositif de visualisation en couleurs, comportant :
- une première source d'image (1) émettant un premier faisceau d'une première couleur déterminée (FV) ;
- une deuxième source d'image (2) émettant un deuxième faisceau d'une deuxième couleur déterminée (FR);
- un premier dispositif optique mélangeur (4) comprenant une première lame dichroïque recevant lesdits premier et deuxième faisceaux (FV, FR), transmettant le premier faisceau (FV), et réfléchissant le deuxième faisceau (FR) selon une même direction sous la forme d'un premier faisceau résultant (FVR);
- une troisième source d'image (3) émettant un troisième faisceau d'une troisième couleur déterminée (FB);
- un deuxième dispositif optique mélangeur (5) comprenant une deuxième lame dichroïque recevant le premier faisceau résultant (FVR) fourni par le premier dispositif mélangeur (4) ainsi que le troisième faisceau (FB), transmettant le premier faisceau résultant (FRV) et réfléchissant le troisième faisceau (FB) selon une même direction sous la forme d'un deuxième faisceau résultant (FVRB) ;
caractérisé en ce que les sources d'images affichent des images de mêmes dimensions et en ce que de dispositif est un dispositif de visualisation collimatée comportant :
- un premier objectif de collimation (42) situé sur le trajet du premier faisceau résultant ;
- un deuxième objectif de collimation (32) situé sur le trajet du troisième faisceau;
- un troisième objectif de collimation (50) recevant le deuxième faisceau résultant et le transmettant à un observateur.

2. Dispositif de visualisation selon la revendication 1 caractérisé en ce que les directions du premier et deuxième faisceaux (FV, FR) sont concourantes, et que la première lame dichroïque (4) est située à l'intersection des deux dits faisceaux (FV, FR) inclinée selon la bissectrice de l'angle formé par les directions de ces faisceaux (FV, FR).

3. Dispositif de visualisation selon la revendication 1, caractérisé en ce que les directions du premier faisceau résultant (FVR) et du troisième faisceau (FB) sont concourantes et que la deuxième lame dichroïque (5) est située à l'intersection des deux dits faisceaux (FVR,FB), inclinée selon la bissectrice de l'angle formé par les directions de ces faisceaux (FVR, FB).

4. Dispositif de visualisation selon la revendication 1, caractérisé en ce que la première couleur du premier faisceau (FV) est verte et que les couleurs du deuxième et troisième faisceaux (FR, FB) sont rouge et bleue.

5. Dispositif de visualisation selon la revendication 4, caractérisé en ce que la deuxième couleur du deuxième faisceau (FR) est rouge et la troisième couleur du troisième faisceau (FB) est bleue.

6. Dispositif de visualisation selon la revendication 1, caractérisé en ce qu'il comporte un premier dispositif optique de réflexion (31) situé sur le trajet du troisième faisceau (FB) et permettant de réfléchir ce troisième faisceau vers le deuxième dispositif mélangeur (5).

7. Dispositif de visualisation selon la revendication 1, caractérisé en ce qu'il comporte un deuxième dispositif optique de réflexion (21) situé sur le trajet du deuxième faisceau (FR) et permettant de réfléchir ce deuxième faisceau vers le premier dispositif mélangeur (4).

8. Dispositif de visualisation selon la revendication 1, caractérisé en ce que les images des trois sources d'images (1,2,3) émettent des faisceaux (FV,FR, FB) de même section et que les trajets optiques des faisceaux émis des différentes sources sont de même longueur.

## Patentansprüche

1. Farbsichtvorrichtung, mit
- einer ersten Bildquelle (1), die einen ersten Strahl mit einer ersten bestimmten Farbe (FV) aussendet;
- einer zweiten Bildquelle (2), die einen zweiten Strahl mit einer zweiten bestimmten Farbe (FR) aussendet;
- einer ersten optischen Mischvorrichtung (4) mit einem ersten dichroitischen Plättchen, die den ersten und den zweiten Strahl (FV, FR) empfängt und in einer einzigen Richtung in Gestalt eines ersten resultierenden Strahls (FVR) sowohl den ersten Strahl (FV) durchläßt als auch den zweiten Strahl (FR) reflektiert;
- einer dritten Bildquelle (3), die einen dritten Strahl mit einer dritten bestimmten Farbe (FB) aussendet;
- einer zweiten optischen Mischvorrichtung (5) mit einem zweiten dichroitischen Plättchen, die den von der ersten Mischvorrichtung (4) gelieferten ersten resultierenden Strahl (FVR) sowie den dritten Strahl (FB) empfängt und in einer einzigen Richtung in Gestalt eines zweiten resultierenden Strahls (FVRB) sowohl den ersten resultierenden Strahl (FRV) durchläßt als auch den dritten Strahl (FB) reflektiert;
dadurch gekennzeichnet, daß die Bildquellen Bilder gleicher Abmessungen anzeigen und daß die Vorrichtung eine kollimatierende Sichtvorrichtung ist mit
- einem ersten Kollimatorobjektiv (42), das im Weg des ersten resultierenden Strahls angeordnet ist;
- einem zweiten Kollimatorobjektiv (32), das im Weg des dritten Strahls angeordnet ist;
- einem dritten Kollimatorobjektiv (50), das den zweiten resultierenden Strahl empfängt und ihn zu einem Beobachter durchläßt.

2. Sichtvorrichtung gemäß Anspruch 1, dadurch gekennzeichnet, daß sich die Richtungen des ersten und des zweiten Strahls (FV, FR) kreuzen und daß das erste dichroitische Plättchen (4) im Schnittpunkt dieser beiden Strahlen (FV, FR) in Richtung der Winkelhalbierenden des von den Richtungen dieser Strahlen (FV, FR) gebildeten Winkels geneigt angeordnet ist.

3. Sichtvorrichtung gemäß Anspruch 1, dadurch gekennzeichnet, daß sich die Richtungen des ersten resultierenden Strahls (FVR) und des dritten Strahls (FB) kreuzen und daß das zweite dichroitische Plättchen (5) im Schnittpunkt dieser beiden Strahlen (FVR, FB) in Richtung der Winkelhalbierenden des von den Richtungen dieser Strahlen (FVR, FB) gebildeten Winkels geneigt angeordnet ist.

4. Sichtvorrichtung gemäß Anspruch 1, dadurch gekennzeichnet, daß die erste Farbe des ersten Strahls (FV) Grün ist und daß die Farben des zweiten und des dritten Strahls (FR, FB) Rot und Blau sind.

5. Sichtvorrichtung gemäß Anspruch 4, dadurch gekennzeichnet, daß die zweite Farbe des zweiten Strahls (FR) Rot und die dritte Farbe des dritten Strahls (FB) Blau ist.

6. Sichtvorrichtung gemäß Anspruch 1, dadurch gekennzeichnet, daß sie eine erste optische Reflexionsvorrichtung (31) enthält, die im Weg des dritten Strahls (FB) angeordnet ist und die Reflexion dieses dritten Strahls gegen die zweite Mischvorrichtung (5) ermöglicht.

7. Sichtvorrichtung gemäß Anspruch 1, dadurch gekennzeichnet, daß sie eine zweite optische Reflexionseinrichtung (21) enthält, die im Weg des zweiten Strahls angeordnet ist und die Reflexion dieses zweiten Strahls gegen die erste Mischvorrichtung (4) ermöglicht.

8. Sichtvorrichtung gemäß Anspruch 1, dadurch gekennzeichnet, daß die Bilder der drei Bildquellen (1, 2, 3) Strahlen (FV, FR, FB) von gleichem Querschnitt aussenden und daß die optischen Wege der von verschiedenen Quellen ausgesandten Strahlen dieselbe Länge besitzen.

## Claims

1. Colour viewing device comprising:
- a first image source (1) emitting a first beam of a first given colour (FV);
- a second image source (2) emitting a second beam of a second given colour (FR);
- a first optical mixing device (4) comprising a first dichroic sheet receiving the said first and second beams (FV, FR), transmitting the first beam (FV) and reflecting the second beam (FR) in the same direction in the form of a first resultant beam (FVR);
- a third image source (3) emitting a third beam of a third given colour (FB);
- a second optical mixing device (5) comprising a second dichroic sheet receiving the first resultant beam (FVR) supplied by the first mixing device (4) and the third beam (FB), transmitting the first resultant beam (FRV) and reflecting the third beam (FB) in the same direction in the form of a second resultant beam (FVRB);
characterised in that the image sources display images of the same dimensions and in that the device is a collimated viewing device comprising:
- a first collimation objective (42) situated in the path of the first resultant beam;
- a second collimation objective (32) situated in the path of the third beam;
- a third collimation objective (50) receiving the second resultant beam and transmitting it to an observer.

2. Viewing device according to Claim 1, characterised in that the directions of the first and of the second beams (FV, FR) are concurrent and in that the first dichroic sheet (4) is situated at the intersection of the said two beams (FV, FR) inclined along the line bisecting the angle formed by the directions of these beams (FV, FR).

3. Viewing device according to Claim 1, characterised in that the directions of the first resultant beam (FVR) and of the third beam (FB) are concurrent and in that the second dichroic sheet (5) is situated at the intersection of the said two beams (FVR, FB) inclined along the line bisecting the angle formed by the directions of these beams (FVR, FB).

4. Viewing device according to Claim 1, characterised in that the first colour of the first beam (FV) is green and in that the colours of the second and third beams (FR, FB) are red and blue.

5. Viewing device according to Claim 4, characterised in that the second colour of the second beam (FR) is red and the third colour of the third beam (FB) is blue.

6. Viewing device according to Claim 1, characterised in that it comprises a first optical reflection device (31) situated in the path of the third beam (FB) and allowing reflection of this third beam towards the second mixing device (5).

7. Viewing device according to Claim 1, characterised in that it comprises a second optical reflection device (21) situated in the path of the second beam (FR) and allowing reflection of this second beam towards the first mixing device (4).

8. Viewing device according to Claim 1, characterised in that the images of the three image sources (1, 2, 3) emit beams (FV, FR, FB) with the same section and in that the optical paths of the beams emitted by the different sources are of the same length.
